# EUROPÄISCHE PATENTSCHRIFT

(11) **EP 1 881 120 B1**
(45) Veröffentlichungstag und Bekanntmachung des Hinweises auf die Patenterteilung: **15.06.2011**
(21) Anmeldenummer: 07013746.8
(22) Anmeldetag: 13.07.2007
(51) Int. Cl.: E04B 1/19

(54) **Hilfselement , Verfahren und Vorrichtung zur Herstellung eines aus stabförmigen Teilen gebildeten Fachwerks**
Auxiliary element, method and device for manufacturing a framework made of rod-shaped parts
Élément de soutien, procédé et dispositif destinés à la fabrication d'un treillis formé à partir de pièces en forme de tiges

(30) Priorität: 20.07.2006 DE 102006034130
(43) Veröffentlichungstag der Anmeldung: 23.01.2008
(73) Patentinhaber: Fachhochschule Stralsund, 18435 Stralsund (DE)
(72) Erfinder: Schwanitz, Volkmar, 18445 Gross Mohrdorf (DE)
(74) Vertreter: Müller Verweyen

(56) Entgegenhaltungen:
- EP-A- 1 195 580
- WO-A-2005/111330
- DE-A1- 19 517 077

## Beschreibung

Die Erfindung betrifft ein Hilfselement für die Herstellung eines aus stabförmigen Teilen gebildeten Fachwerks nach dem Oberbegriff von Anspruch 1, sowie ein Verfahren und eine computergesteuerte Vorrichtung zur Herstellung eines aus stabförmigen Teilen gebildeten Fachwerks unter Verwendung eines solchen Hilfselements.

Eine automatisierte Fertigung von Fachwerken insbesondere in Variantenkonstruktionen wird bisher durch den hohen Handhabungsaufwand erschwert. Die zugeschnittenen stabförmigen Teile müssen mit hoher Genauigkeit in einer Verbindungsvorrichtung, beispielsweise einer Schweißvorrichtung, manuell positioniert werden. Aufgrund der individuell zugeschnittenen Enden der zu verbindenden stabförmigen Teile fehlen einfach zu identifizierende Bezugspunkte für die Positionierung der stabförmigen Teile in der Verbindungsvorrichtung. Erschwert wird die Handhabung zusätzlich, wenn besondere Präzisionsanforderungen gestellt werden, beispielsweise beim Laserstrahlschweißen. Eine automatisierte Fertigung aus stabförmigen Teilen gebildeter Fachwerke ist zusätzlich mit einem hohen Aufwand für die Programmierung computergesteuerter Maschinen, beispielsweise Robotern, verbunden, was die Wirtschaftlichkeit insbesondere bei kleineren Stückzahlen, Einzelanfertigungen bzw. Variantenkonstruktionen in Frage stellt. Einzelne Lösungen wie die automatisierte Fertigung von Fenstern und Türen aus Aluminium sind trotz einer computergesteuerten Konstruktion und Lagerhaltung mit hohem Arbeitskräfteeinsatz für die Handhabung der Einzelteile verbunden.

EP 1 195 580 A2 offenbart eine Einrichtung zum Erfassung von Relativbewegungen eines Objekts mittels eines opto-elektronischen Kraft-Momenten-Sensors.

DE 20 2006 018 937 U1 offenbart eine Vorrichtung zum Befestigen von Flächenelementen, beispielsweise Eindeckelemente oder Dachelemente für Dachkonstruktionen sowie Fassadenelemente oder Wandelemente für Wandkonstruktionen, an einer Tragkonstruktion, insbesondere einem Raumfachwerk.

Die Aufgabe der vorliegenden Erfindung besteht darin, den Fertigungsaufwand in der Herstellung eines aus stabförmigen Teilen gebildeten Fachwerks zu verringern und insbesondere eine wirtschaftliche automatisierte Fertigung derartiger Fachwerke zu ermöglichen.

Die Erfindung löst diese Aufgabe mit den Mitteln von Anspruch 1. Ein Hilfselement ist mit einem stabförmigen Teil festsitzend und positionsgenau zusammenwirkend verbindbar und kann dem stabförmigen Teil somit während des gesamten Bearbeitungsvorgangs zugeordnet bleiben. Das Hilfselement verkörpert insbesondere ein Koordinatensystem mit fixiertem Ursprung. Nach dem Einspannen des stabförmigen Teils in die Bearbeitungsvorrichtung können für die Bearbeitung wesentliche Maße, insbesondere die axiale Position und Länge sowie die Winkelstellung des stabförmigen Teils bestimmt werden. Dadurch kann eine über den gesamten Herstellungsvorgang reproduzierbare maßgenaue automatische Positionierung des stabförmigen Teils in der Bearbeitungsvorrichtung erreicht werden. Ein manuelles Anpassen der Positionierung des stabförmigen Teils in der Bearbeitungsvorrichtung ist nicht erforderlich. Die Erfindung ermöglicht eine vollständige Automatisierung der Herstellung von aus stabförmigen Elementen gebildeten Fachwerken und damit eine erhebliche Reduzierung von Fertigungszeiten und -kosten.

Insbesondere gehen die durch das Hilfselement definierten Maße beim Herausnehmen eines stabförmigen Teils aus der Bearbeitungsvorrichtung nicht verloren, sondern bleiben während nachfolgender Bearbeitungsschritte erhalten, und gestatten insbesondere die definierte Positionierung des stabförmigen Teils in einer nachfolgenden Verbindungsvorrichtung zur Montage der stabförmigen Teile zu einem Fachwerk.

Um die Positionierung des zugeordneten stabförmigen Teils in der Bearbeitungsvorrichtung festzulegen bzw. zu bestimmen, umfasst das Hilfselement vorzugsweise Bezugsmittel, insbesondere Bezugsflächen, zur Festlegung eines Bezugspunktes, insbesondere eines axialen Bezugspunktes, einer Winkelstellung, einer Orientierung und/oder eines Koordinatensystems des zugeordneten stabförmigen Teils. Die konkrete Form der Bezugsmittel ist nicht festgelegt, solange sie die Festlegung positioneller Bezugsgrößen ermöglicht.

Vorzugsweise ist das Hilfselement als Handhabungselement für das stabförmige Teil ausgebildet. Demnach wird ein stabförmiges Teil mittels des zugeordneten Hilfselements in die Bearbeitungsvorrichtung eingespannt. Die Bearbeitungsvorrichtung greift also vorzugsweise über das Hilfselement an dem stabförmigen Teil an. Dies erleichtert die Handhabung stabförmigen Teils und erlaubt auf einfache Weise eine Positionsfestlegung des stabförmigen Teils in der Bearbeitungsvorrichtung.

Das Hilfselement kann vorzugsweise zur Kennzeichnung des zugeordneten stabförmigen Teils ein entsprechendes Kennzeichnungsmittel aufweisen. Eine Kennzeichnung ist zweckmäßig, da in der Regel jedes stabförmige Teil an einer bestimmten Position innerhalb des Fachwerk angeordnet ist. Vorzugsweise ist das Kennzeichnungsmittel maschinenlesbar ausgeführt, um die automatische Ermittlung der Kennzeichnung mittels einer Auslesevorrichtung in der Bearbeitungsvorrichtung zu ermöglichen und hierdurch eine weitergehende Automatisierung des Produktionsvorgangs zu ermöglichen. Verwechslungen und Fehlpositionierungen der stabförmigen Teile in der automatischen Bearbeitung können damit verhindert werden.

Ein Fachwerk bzw. Fachwerkgerüst ist eine starre, gerüstartige ebene oder räumliche Konstruktion, bei der stabförmige Teile in der Regel an beiden Stabenden unter Bildung von Knotenpunkten fest miteinander verbunden sind. Stabförmige Teile sind insbesondere Stäbe oder Rohre. Fachwerke finden beispielsweise Anwendung als Tragwerkskonstruktionen für Hallen, Brücken, Kräne, Masten insbesondere für Stromleitungen, Gerüste, Maschinen, Fahrzeuge, beispielsweise Kleinflugzeuge oder Fahrräder. Beispiele für andere Anwendungen sind ebene Fachwerke wie Schutzzäune oder Werktore. Bevorzugte Anwendungen betreffen Fachwerke aus Metall, insbesondere Stahl oder Aluminium.

Die Begriffe "Bearbeitung" und "Bearbeitungsvorrichtung" bezeichnen eine beliebige Tätigkeit in der Herstellung des Fachwerks, insbesondere eine spanabhebende oder spanlose Bearbeitung der stabförmigen Teile, Lagerung der stabförmigen Teile und/oder Verbindung der stabförmigen Teile zu einem Fachwerk.

Die Erfindung wird im folgenden anhand vorteilhafter Ausführungsbeispiele unter Bezugnahme auf die beigefügten Zeichnungen erläutert. Es zeigt:
- Fig. 1:: eine perspektivische Ansicht eines Flugzeugkäfigs aus Stahlrohren;
- Fig. 2:: eine perspektivische Ansicht eines Ausschnitts aus Fig. 1 im Bereich eines Knotens;
- Fig. 3:: eine perspektivische Ansicht eines für einen Knoten zugeschnittenen Stahlrohrendes;
- Fig. 4:: eine Seitenansicht auf ein stabförmiges Teil mit einem daran befestigten Hilfselement;
- Fig. 5:: eine perspektivische Ansicht eines Ausschnitts aus einem Fachwerk mit einem an einem Rohr befestigten Hilfselement;
- Fig. 6:: eine Querschnittsansicht eines Hilfselements;
- Fig. 7:: eine seitliche Ansicht eines Hilfselements;
- Fig. 8:: eine perspektivische Ansicht einer computergesteuerten Bearbeitungsmaschine; und
- Fig. 9:: eine perspektivische Ansicht einer computergesteuerten Schweißroboteranordnung.

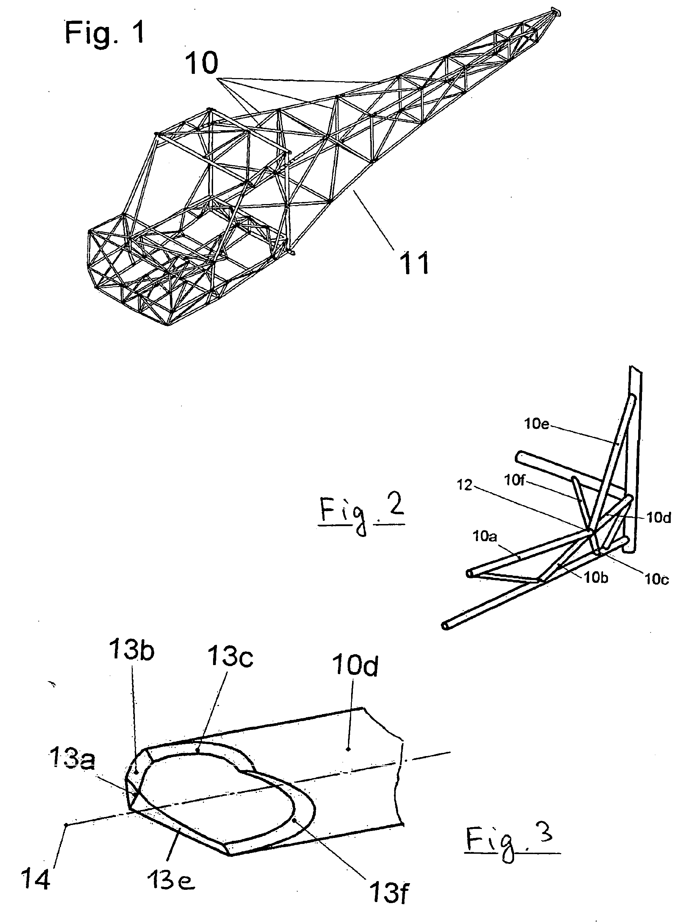

Als Beispiel für ein Fachwerk zeigt Fig. 1 einen aus einzelnen Rohren 10 gefertigten Käfig 11 als Tragwerk bzw. -gerüst für ein Kleinflugzeug. Zur Bildung des Fachwerks 11 sind im wesentlichen sämtliche Rohre 10 an ihren Enden miteinander verbunden. Dabei ist jedem einzelnen Rohr 10a, 10b, 10c, 10d, ... eine individuelle Position in dem Fachwerk 11 zugeordnet, was in Fig. 1 durch eine Vielzahl virtueller etikettartiger Kennzeichnungen angedeutet ist. Die Rohre 10 bestehen vorzugsweise aus Metall, insbesondere Stahl oder Aluminium.

Fig. 2 zeigt einen Ausschnitt aus Fig. 1 im Bereich eines Knotens 12, der durch Verbindung von in diesem Fall sechs Rohren 10a bis 10f an jeweils einem Rohrende gebildet wird. Der Knoten 12 ist daher eine Knotenverbindung von Rohrenden. Fig. 3 zeigt beispielsweise das Rohr 10d aus Fig. 2. Zur Verbindung des Rohrs 10d mit den übrigen Rohren 10a, 10b, 10c, 10e, 10f ist das Rohr an seinem dem Knoten 12 zugewandten Ende entsprechend zugeschnitten, d.h. es weist entsprechende Anschlussflächen 13a, 13b, 13c, 13e, 13f auf, wobei das Rohr 10d beispielsweise mit dem Rohr 10a durch Verschweißen entlang der Anschlussfläche 13a und einer entsprechenden Anschlussfläche 13d des Rohrs 10a verbunden wird.

Insbesondere im Fall von nicht-rechtwinkligen, räumlich windschiefen Anordnungen zu verbindender Rohre ergeben sich dabei komplexe Anschlussflächen 13 an den Rohrenden, wie aus Fig. 3 ersichtlich. Die Festlegung eines Bezugspunktes wird dadurch erheblich erschwert. Theoretisch einfach zu definierende Bezugspunkte sind die virtuellen Schnittpunkte 14 zwischen Rohrachsen miteinander zu verbindender Rohre. Im Beispiel der Fig. 3 schneiden sich die Rohrachsen der zu verbindenden Rohre 10a bis 10f in dem Schnittpunkt 14, der als Bezugspunkt für jedes der Rohre 10a bis 10f dienen kann. Jede axiale Position auf der Rohrachse beispielsweise des Rohrs 10d ist relativ zu dem Bezugspunkt 14 eindeutig definiert. Die Länge eines Rohrs ist eindeutig definiert als der Abstand der beiden den Rohrenden entsprechenden Bezugspunkte 14. In der Praxis ist die präzise Handhabung und Positionierung der Rohre 10 relativ zu virtuellen Bezugspunkten jedoch schwierig und aufwendig.

Zur Vereinfachung der Positionierung und Handhabung eines Rohrs 10 ist ein Hilfselement 15 festsitzend an dem Rohr 10 befestigt. Das Hilfselement 15 ist zweckmäßigerweise ein starrer Körper mit einer Durchgangsbohrung 22, deren Innenquerschnitt zweckmäßigerweise an den Außenquerschnitt des entsprechenden Rohrs 10 angepasst ist. Um die erforderliche Positionsgenauigkeit des Hilfselements 15 über die gesamte Bearbeitung des zugeordneten Rohrs 10 sicherzustellen, ist ein ausreichender Kraftschluss insbesondere mittels Klemmsitz des Hilfselements 15 auf dem Rohr 10 bevorzugt. Zu diesem Zweck ist der Innenquerschnitt der Durchgangsbohrung 22 vorzugsweise geringfügig kleiner als der Außenquerschnitt des entsprechenden Rohrs 10. Das Hilfselement 15 wirkt mit dem Rohr 10 mit einer Genauigkeit von vorzugsweise unter 0,1 mm, weiter vorzugsweise unter 10 µm zusammen.

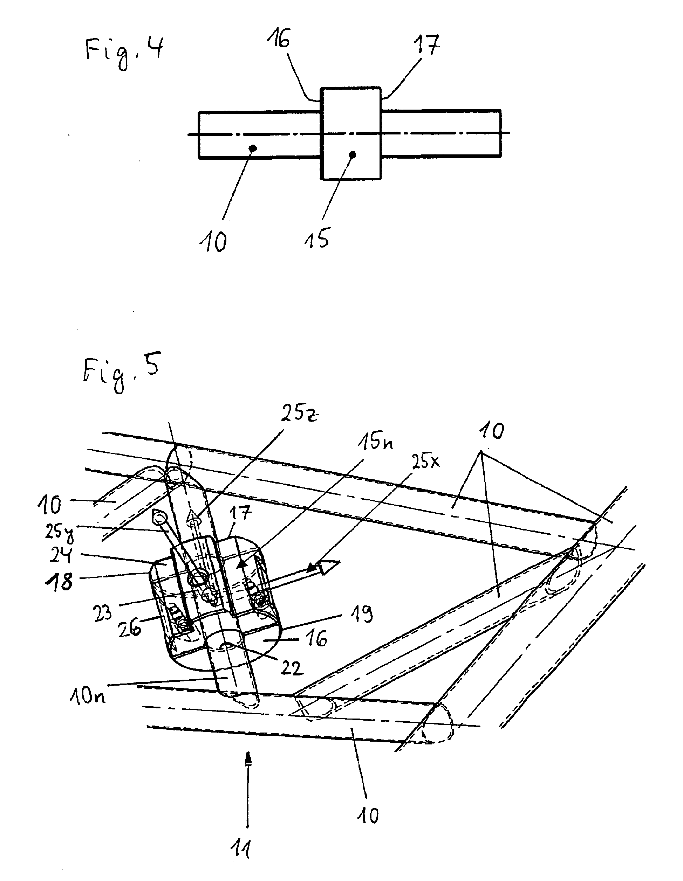

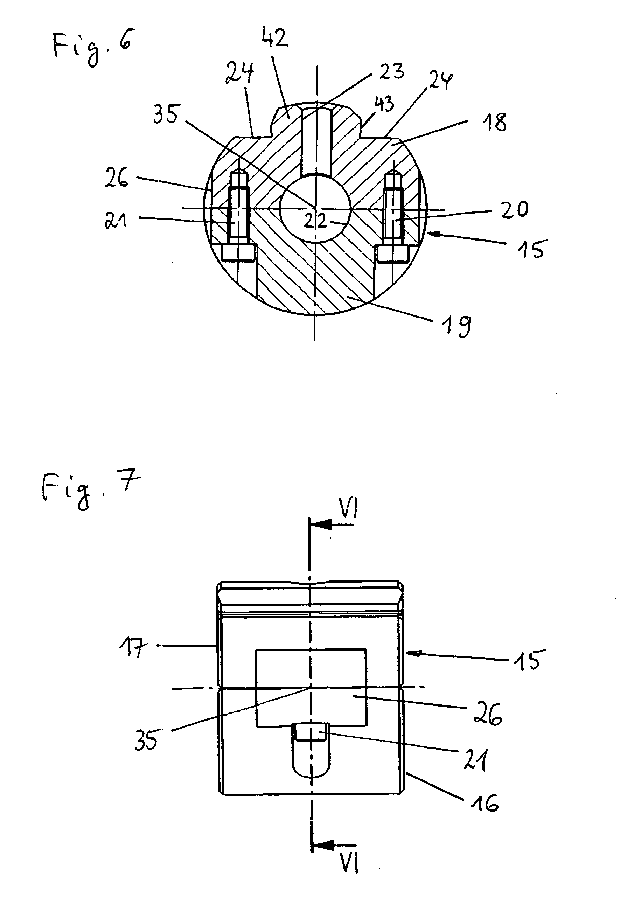

Das Hilfselement 15 ist vorzugsweise mehrteilig, insbesondere zweiteilig aufgebaut, wie aus der Ausführungsform gemäß den Fig. 5 bis 7 ersichtlich. Die beiden Hälften 18, 19 sind vorzugsweise entlang eines Längsschnitts getrennt. Ein Längsschnitt ist ein zur Rohrachse des zugeordneten Rohres paralleler Schnitt, wobei vorzugsweise die Rohrachse in der Schnittebene liegt. Die Hälften 18, 19 sind zweckmäßigerweise so geformt, dass durch Lösen der Hälften 18, 19 voneinander das Hilfselement 15 von dem zugeordneten Rohr 10 abnehmbar ist. Die Hälften 18, 19 sind mittels lösbaren Befestigungsmitteln, beispielsweise Schrauben 20, 21 lösbar miteinander verbunden.

Das Hilfselement 15 ist vorzugsweise im wesentlichen zylinderförmig, wobei die Zylinderachse zweckmäßigerweise mit der Rohrachse zusammenfällt.

Das Hilfselement 15 definiert insbesondere ein Koordinatensystem in einem Bezugspunkt 35 des Rohrs 10. Die Festlegung bzw. Bestimmung des Bezugspunkts 35 in einer Bearbeitungsvorrichtung kann mittels mindestens einer zu der Rohrachse senkrechten Fläche des Hilfselements 15 geschehen, beispielsweise mittels einer Stirnfläche 16, 17 des Hilfselements 15. Die axiale Position des Hilfselements 15 kann auch mittels einer zu der Rohrachse senkrechten Bohrung 23 des Hilfselements 15 festgelegt werden. Das Hilfselement 15 definiert vorzugsweise auch eine Winkelstellung des Rohrs 10, d.h. den Winkel in Bezug auf gedachte Rotation des Hilfselements 15 um die Rohrachse. Dies kann mittels der zu der Rohrachse senkrechten Bohrung 23 des Hilfselements 15 geschehen. Die Winkelstellung kann auch mittels einer zu der Rohrachse parallelen Fläche 24 des Hilfselements 15 festgelegt werden. Des weiteren legt das Hilfselement 15 vorzugsweise die axiale Richtung bzw. die Orientierung des Rohrs 15 fest. Im allgemeinen definiert das Hilfselement 15 vorzugsweise ein dreidimensionales Koordinatensystem 25x, 25y, 25z, wie in Fig. 5 angedeutet. Die Mittel 16, 17, 23, 24 zur Definition von Position, Winkelstellung und/oder Orientierung des zugeordneten Rohrs 10 werden allgemein als Bezugsmittel bezeichnet.

Das Hilfselement 15 weist vorzugsweise Kennzeichnungsmittel 26 zur individuellen Kennzeichnung des dem Hilfselement 15 zugeordneten Rohrs 10 auf. Beispielsweise ist das Hilfselement 15n in Fig. 5 dem Rohr 10n eindeutig zugeordnet, das eine individuelle Position in dem in Fig. 5 gezeigten Rohrfachwerk aufweist. Das Kennzeichnungsmittel 26 des Hilfselements 15n enthält daher Information, dass es dem Rohr 10n zugeordnet ist. Das Kennzeichnungsmittel 26 ist vorzugsweise maschinenlesbar ausgebildet, um die Auslesung durch eine entsprechenden Bearbeitungsvorrichtung zu ermöglichen. Das Kennzeichnungsmittel 26 kann als Chip, Transponder, Barcode, Etikett oder dergleichen ausgebildet sein. Das Kennzeichnungsmittel 26 kann auch zur Definition des dreidimensionalen Koordinatensystems 25x, 25y, 25z verwendet werden. Beispielsweise definiert das Kennzeichnungsmittel 26 in Fig. 5 die Gegen-x-Richtung.

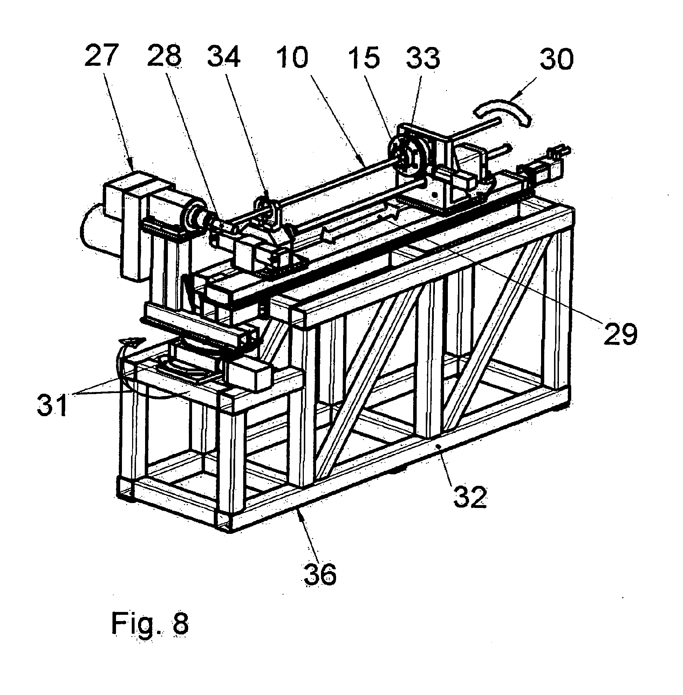

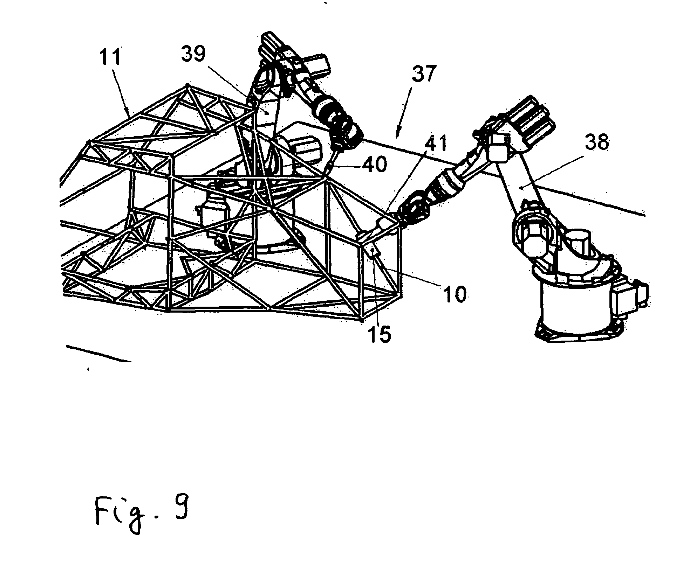

Ein bevorzugtes Verfahren zur Herstellung eines Rohrfachwerks 11 wird im folgenden insbesondere anhand der Fig. 8 und 9 erläutert.

Vorab werden die Konstruktions- bzw. Bearbeitungsdaten und -maße für sämtliche Rohre 10 eines Rohrfachwerks 11 und deren Bearbeitung und Positionierung insbesondere aus einer automatisierten Variantenkonstruktion mit Hilfe einer üblichen CAD/CAM-Anlage abgeleitet.

Danach wird Rohmaterial für ein Rohr 10 aus einem Lager entnommen und daran ein Hilfselement 15 mittels der Befestigungsmittel 20, 21 fest klemmend befestigt. Die Zuordnung des Hilfselements 15 zu dem Rohr 10 bleibt im wesentlichen über sämtliche Bearbeitungsvorgänge des Rohrs 10 erhalten. Das Hilfselement 15 bestimmt somit die Kennzeichnung des entsprechenden Rohrs 10. Das Hilfselement 15 wird so an dem Rohmaterial angebracht, dass aufgrund der Bearbeitung des zugeordneten Rohrs 10 in der nachfolgend beschriebenen Bearbeitungsvorrichtung 36 das Hilfselement 15 etwa mittig an dem Rohr 10 angebracht ist. Etwa mittig bedeutet in dem mittleren Drittel, vorzugsweise in dem mittleren Fünftel der Länge des Rohrs 10. Die mittige Anordnung des Hilfselements 15 hat den Vorzug, dass die Positionsgenauigkeit für die etwa gleich beabstandeten Rohrenden im wesentlichen gleich ist.

Das mit dem Hilfselement 15 fest verbundene Rohr 10 wird in eine Vorrichtung 36 zum Bearbeiten der Enden des Rohrs 10 eingespannt. Im vorliegenden Beispiel handelt es sich um eine CNC-Bearbeitungsmaschine mit einer Fräseinrichtung 27, die ein Fräswerkzeug 28 umfasst. Es sind auch andere spanabhebende oder spanlose Bearbeitungsvorrichtungen möglich. Die auf einem Traggestell 32 montierte Bearbeitungsmaschine 36 umfasst mindestens eine ansteuerbare Achse 29, insbesondere eine Linearachse zum Verschieben des eingespannten Rohrs 10 entlang der Rohrachse. Eine zweite ansteuerbare Achse 30 dient zur Rotation des eingespannten Rohrs 10 um die Rohrachse zur Einstellung eines entsprechenden Drehwinkels, eine dritte ansteuerbare Achse 31 zur Rotation der Fräseinrichtung 27 um eine zu der Rohrachse des Rohrs 10 senkrechten Achse zur Einstellung eines entsprechenden Bearbeitungswinkels. Im allgemeinen richtet sich die Zahl und Anordnung der ansteuerbaren Achsen insbesondere nach den zu formenden Anschlussflächen 13 (siehe Fig. 3) an den Enden der Rohre 10.

Vorzugsweise wird das Rohr 10 über das Hilfselement 15 in die Bearbeitungsvorrichtung 36 eingespannt. Das Hilfselement 15 kann daher auch als Spannelement bezeichnet werden. Die Bearbeitungsvorrichtung 36 umfasst zu diesem Zweck eine Spanneinrichtung 33, die zum Angreifen an das bzw. zum Umspannen des Hilfselements 15 eingerichtet ist. Die Festigkeit des Hilfselements 15 ist ausreichend, um die erforderlichen Bearbeitungskräfte auf das Rohr 10 zu übertragen, ohne dass Deformationen an der Spannstelle hervorgerufen werden.

Um die Funktion des Hilfselements 15 als Bezugselement für Position, Winkelstellung und/oder Orientierung des zugeordneten Rohrs zu ermöglichen, kann die Spanneinrichtung 33 entsprechende, nicht gezeigte Bezugsmittel aufweisen, die mit den Bezugsmitteln 16, 17, 23, 24 des Hilfselements 15 positionsgenau zusammenwirken. Im Falle der Anschlagsflächen 16, 17, 24 des Hilfselements 15 können dies insbesondere entsprechende Anschlagsflächen der Spanneinrichtung 33 sein. Im Falle der Bezugsbohrung 23 des Hilfselements 15c kann dies ein in die Bezugsbohrung 23 eingreifender Stift sein. Das Rohr 10 wird dann so in die Bearbeitungsvorrichtung 36 eingespannt, dass die Bezugsmittel des Hilfselements 15 mit den entsprechenden Bezugsmitteln der Spanneinrichtung positionsgenau zusammenwirken. Positionsgenau bedeutet insbesondere mit einer Genauigkeit von unter 0,1 mm, vorzugsweise unter 10 µm. Es kann auch vorgesehen sein, dass die Bearbeitungsvorrichtung 36 das Hilfselement 15 formschlüssig umfasst, so dass die Außenfläche des Hilfselements 15 und eine entsprechende Innenfläche der Bearbeitungsvorrichtung 36 zusammenwirkende Bezugsmittel darstellen. Auch der Steg 42 des Hilfselements 15 oder entsprechende Anschlagflächen 43 können Bezugsmittel darstellen.

Anstelle der Bezugselemente an der Spanneinrichtung 33 können Position, Winkelstellung und/oder Orientierung des zugeordneten Rohrs auch durch Vermessung der Position, Winkelstellung und/oder Orientierung des in die Bearbeitungsvorrichtung 36 eingespannten Hilfselements 15 relativ zu der Bearbeitungsvorrichtung 36 festgelegt werden. Die gemessene Position wird dann zweckmäßigerweise zentral Gespeichert, um für nachfolgende Bearbeitungsschritte zur Verfügung zu stehen.

Zur Erhöhung der Stabilität können eine oder mehrere weitere insbesondere an einem Rohrende des Rohrs 10 angreifende Spanneinrichtungen 34 vorgesehen sein.

Das in die Bearbeitungsmaschine 36 eingespannte Rohr 10 wird dann entsprechend den gespeicherten Konstruktionsdaten automatisch an den Rohrenden zugeschnitten, um die individuellen Anschlussflächen 13 des Rohrs 10 (siehe Fig. 3) zu erzeugen. Die individuellen Bearbeitungsdaten und -maße für das jeweils eingespannte Rohr 10 werden dabei unter Verwendung der aus dem Kennzeichnungsmittel 26 ausgelesenen Kennzeichnung des Rohrs 10 bestimmt. Zum Auslesen des Kennzeichnungsmittels 26 des Hilfselements 15 umfasst die Bearbeitungsvorrichtung 36 zweckmäßigerweise entsprechende automatische Auslesemittel, die insbesondere in der Spanneinrichtung 33 angeordnet sein können. Die Auslesemittel sind an das Kennzeichnungsmittel angepasst, es handelt sich beispielsweise um einen Barcode-, Chip- oder Transponderleser. Die Bearbeitungsposition wird von dem durch das Hilfselement 15 festgelegten axialen Bezugspunkt 35 aus bestimmt. Auf diese Weise ergibt sich die virtuelle Länge des Rohrs 10 als Abstand des Knotenpunkts 14 an einem Rohrende zu dem Bezugspunkt 35 plus dem Abstand des Knotenpunkts 14 an dem anderen Rohrende zu dem Bezugspunkt 35. Die Winkelorientierung wird ebenfalls relativ zu der durch das Hilfselement 15 festgelegten Winkelstellung festgelegt.

Die Bearbeitungsvorrichtung 36 kann zur Bearbeitung beider Rohrenden zwei Bearbeitungseinrichtungen, beispielsweise Fräseinrichtungen aufweisen. Andernfalls wird zunächst ein Rohrende bearbeitet und anschließend das Rohr 10 zur Bearbeitung des anderen Rohrendes mit umgekehrter Orientierung in die Bearbeitungsvorrichtung 26 eingespannt, wobei das Hilfselement 15 an dem Rohr 10 montiert bleibt. Position, Winkelstellung und/oder Orientierung des zugeordneten Rohrs werden dabei erneut festgelegt, entweder indem die erneute Einspannung so erfolgt, dass die Bezugsmittel des Hilfselements 15 mit den entsprechenden Bezugsmitteln der Spanneinrichtung positionsgenau zusammenwirken, oder indem die Position, Winkelstellung und/oder Orientierung des in die Bearbeitungsvorrichtung 36 eingespannten Hilfselements 15 relativ zu der Bearbeitungsvorrichtung 36 erneut vermessen werden. Die Bearbeitungsposition an dem anderen Rohrende und/oder die Winkelorientierung werden wiederum relativ zu dem durch das Hilfselement 15 festgelegten axialen Bezugspunkt 35 bzw. der durch das Hilfselement 15 festgelegten Winkelstellung bestimmt.

Nach dem Ausspannen des Rohrs 10 aus der Bearbeitungsvorrichtung 36 wird das Rohr 10 gegebenenfalls zwischengelagert, wobei das Hilfselement 15 an dem Rohr 10 montiert bleibt.

Nach dem Zuschneiden der das Fachwerk 11 bildenden Rohre 10 in der Bearbeitungsmaschine 36 werden die Rohre 10 mittels der computergesteuerten Verbindungsvorrichtung 37 zu dem Fachwerk 11 verbunden. In dem in Fig. 9 gezeigten Ausführungsbeispiel handelt es sich um eine Schweißvorrichtung, beispielsweise eine Laserschweißvorrichtung. Andere Verbindungsarten, beispielsweise Kleb-, Niet- oder Schraubverbindungen sind denkbar. Die Verbindungsvorrichtung 37 umfasst insbesondere eine Positioniereinrichtung 38, vorzugsweise einen Positionierroboter, und eine vorzugsweise von der Positioniereinrichtung unabhängiges Verbindungseinrichtung 39, vorzugsweise eine Schweißeinrichtung. Die Verbindungseinrichtung 39 wird vorzugsweise von einem auf einem Roboter montierten Verbindungswerkzeug 40, insbesondere einem Schweißwerkzeug, gebildet.

Der computergesteuerte Positionierroboter 38 greift das zu positionierende Rohr 10 an dem Hilfselement 15. Allgemeiner gesagt wird das zu positionierende Rohr 10 über das Hilfselement in die Positioniereinrichtung 38 eingespannt. Position, Winkelstellung und/oder Orientierung des Rohrs 10 werden dabei erneut festgelegt, entweder indem die Einspannung so erfolgt, dass die Bezugsmittel des Hilfselements 15 mit entsprechenden Bezugsmitteln in einer Spann- bzw. Greifeinrichtung 41 der Positioniereinrichtung 38 positionsgenau zusammenwirken, oder indem die Position, Winkelstellung und/oder Orientierung des in die Positioniereinrichtung 38 eingespannten Hilfselements 15 relativ zu der Positioniereinrichtung 38 vermessen wird. Die individuellen Bearbeitungsdaten für das jeweils eingespannte Rohr und die Position innerhalb des Fachwerks 11 werden dabei unter Verwendung der aus dem Kennzeichnungsmittel 26 des Hilfsmittels 15 ausgelesenen Kennzeichnung des Rohrs 10 bestimmt. Zum Auslesen des Kennzeichnungsmittels 26 des Hilfselements 15 umfasst die Positioniereinrichtung 38 zweckmäßigerweise entsprechende Auslesemittel, die insbesondere in der Spann- bzw. Greifeinrichtung 41 angeordnet sein können. Die computergesteuerte Verbindungseinrichtung 39 verbindet dann das von der Positioniereinrichtung 38 in der Verbindungsposition gehaltene Rohr 10 entlang der Anschlussflächen des Rohrs 10 mit dem Fachwerk 11 vorzugsweise mittels Heftschweißung. Dabei werden die Positionen und Winkel für die Verbindung wiederum relativ zu dem durch das Hilfselement 15 festgelegten axialen Bezugspunkt 35 bzw. der durch das Hilfselement 15 festgelegten Winkelstellung bestimmt.

Nach dem Verbinden eines Rohrs 10 in das Fachwerk 11 wird das Hilfselement 15 durch Lösen der Verbindungsmittel 20, 21 von dem Rohr abgenommen und kann erneut verwendet werden.

Bearbeitungsvorrichtung 36, Positioniereinrichtung 38 und Verbindungseinrichtung 39 werden vorzugsweise von einer nicht gezeigten zentralen Computereinrichtung gesteuert, die Zugriff auf die Konstruktionsdaten bzw. -maße für sämtliche Rohre 10 bzw. Bauteile des Fachwerks 11 hat.

Die Erfindung wurde zuvor unter Bezugnahme auf Rohre 10 mit rundem Querschnitt beschrieben. Sie ist jedoch hierauf nicht beschränkt, sondern gleichermaßen anwendbar auf Rohre oder Stäbe mit beliebigen anderen, beispielsweise rechteckigen oder dreieckigen Querschnitten.

Jedes Hilfselement 15 ist genau einem Rohr 10 eindeutig zugeordnet und insbesondere zwischen den Enden des zugeordneten Rohrs 10 angebracht. Die Hilfselemente 15 sind dadurch abgegrenzt gegenüber gewöhnlichen Knotenverbindern, die zur Verbindung mindestens zweier Rohre 10 an deren Enden angebracht sind.

## Patentansprüche

1. Hilfselement (15) zur Verwendung in der Herstellung eines aus stabförmigen Teilen (10) gebildeten Fachwerks (11), **dadurch gekennzeichnet, dass** das Hilfselement (15) zum positionsgenauen Zusammenwirken durch festsitzendes Verbinden mit einem stabförmigen Teil (10) und zum Einspannen in eine Bearbeitungsvorrichtung (36) und eine Verbindungsvorrichtung (37) für das stabförmige Teil (10) eingerichtet ist, ein Koordinatensystem des stabförmigen Teils (10) definierende Bezugsmittel (23, 24, 26, 27) umfasst, die die Bestimmung von Maßen an dem über das Hilfselement (15) in die Bearbeitungsvorrichtung (36) oder die Verbindungsvorrichtung (37) eingespannten stabförmigen Teil (10) relativ zu dem Hilfselement (15) erlauben, und von dem zugeordneten stabförmigen Teil (10) abnehmbar ist.

2. Hilfselement nach Anspruch 1, wobei die Bezugsmittel (23, 26, 27) zur Bestimmung eines axialen Bezugspunktes des zugeordneten stabförmigen Teils (10) ausgebildet sind.

3. Hilfselement nach Anspruch 1 oder 2, wobei die Bezugsmittel mindestens eine zu der Längsachse des stabförmigen Teils (10) senkrechte Bezugsfläche (26, 27) umfassen.

4. Hilfselement nach einem der Ansprüche 1 bis 3, **dadurch gekennzeichnet, dass** die Bezugsmittel (23, 24) zur Bestimmung einer Winkelstellung des zugeordneten stabförmigen Teils (10) ausgebildet sind.

5. Hilfselement nach einem der Ansprüche 1 bis 4, **dadurch gekennzeichnet, dass** die Bezugsmittel zur Festlegung einer Orientierung des zugeordneten stabförmigen Teils (10) ausgebildet sind.

6. Hilfselement nach einem der Ansprüche 1 bis 5, umfassend Kennzeichnungsmittel (26) zur Kennzeichnung des zugeordneten stabförmigen Teils (10).

7. Hilfselement nach einem der Ansprüche 1 bis 6, wobei das Hilfselement (15) geteilt ausgeführt ist.

8. Verfahren zur Herstellung eines aus stabförmigen Teilen (10) gebildeten Fachwerks (11), **dadurch gekennzeichnet, dass** das Verfahren die folgenden Schritte umfasst:
- festsitzendes Verbinden der stabförmigen Teile (10) mit jeweils einem zugeordneten, positionsgenau mit dem stabförmigen Teil (10) zusammenwirkenden, ein Koordinatensystem des stabförmigen Teils (10) definierenden Hilfselement (15) gemäß einem der Ansprüche 1 bis 7;
- Einspannen des stabförmigen Teils (10) in eine computergesteuerte Bearbeitungsvorrichtung (36) über das Hilfselement (15);
- Bearbeiten der stabförmigen Teile (10) in der computergesteuerten Bearbeitungsvorrichtung (36), wobei Maße an dem in die Bearbeitungsvorrichtung (36) eingespannten stabförmigen Teil (10) relativ zu dem Hilfselement (15) bestimmbar sind,
- Verbinden der stabförmigen Teile (10) zu dem Fachwerk (11) in einer computergesteuerten Verbindungsvorrichtung (37), wobei das stabförmige Teil (10) über das Hilfselement (15) in die Verbindungsvorrichtung (37) eingespannt ist und Maße an dem in die Verbindungsvorrichtung (37) eingespannten stabförmigen Teil (10) relativ zu dem Hilfselement (15) bestimmbar sind, und
- Abnehmen der Hilfselemente (15) von den stabförmigen Teilen (10),
wobei jedes Hilfselement (15) in dem gesamten Bearbeitungs- und Verbindungsvorgang zwischen dem Verbinden mit dem zugeordneten stabförmigen Teil (10) bis zum Abnehmen von dem zugeordneten stabförmigen Teil (10) an dem zugeordneten stabförmigen Teil (10) montiert bleibt.

9. Verfahren nach Anspruch 8, wobei das Hilfselement (15) zur Festlegung eines axialen Bezugspunktes (35) des zugeordneten stabförmigen Teils (10) verwendet wird.

10. Verfahren nach Anspruch 8 oder 9, wobei das Hilfselement (15) zur Festlegung einer Winkelstellung des zugeordneten stabförmigen Teils (10) verwendet wird.

11. Verfahren nach einem Ansprüche 8 bis 10, wobei das Hilfselement (15) zur Festlegung einer Orientierung des zugeordneten stabförmigen Teils (10) verwendet wird.

12. Verfahren nach einem Ansprüche 8 bis 11, umfassend das Auslesen und Verarbeiten eines Kennzeichnungsmittels (26) des Hilfselements (15).

13. Verfahren nach einem Ansprüche 8 bis 12, wobei das Hilfselement (15) in einem mittleren Bereich eines zugeordneten stabförmigen Teils (10) angebracht wird.

14. Computergesteuerte Vorrichtung (36; 37), umfassend eine computergesteuerte Bearbeitungsvorrichtung (36) mit einem Bearbeitungswerkzeug (28) zum Bearbeiten und/oder eine computergesteuerte Verbindungsvorrichtung (37) mit einem Verbindungswerkzeug (40) zum Verbinden mindestens eines stabförmigen Teils (10) zur Herstellung eines aus stabförmigen Teilen (10) gebildeten Fachwerks (11), **dadurch gekennzeichnet, dass** die Vorrichtung eine Spann- oder Greifeinrichtung (33; 41) zum Einspannen eines mit einem stabförmigen Teil (10) festsitzend verbundenen, ein Koordinatensystem des stabförmigen Teils (10) definierenden Hilfselements (15) gemäß einem der Ansprüche 1 bis 7 und eine Computereinrichtung, die zum Bestimmen von Maßen an einem über das Hilfselement (15) in die Bearbeitungs- und/oder Verbindungsvorrichtung (36; 37) eingespannten stabförmigen Teil (10) relativ zu dem Hilfselement (15) eingerichtet ist, umfasst.

15. Vorrichtung nach Anspruch 14, umfassend Mittel zum Auslesen und Verarbeiten eines Kennzeichnungsmittels (26) des Hilfselements (15).

## Claims

1. Auxiliary element (15) for use in the manufacture of a framework (11) formed of rod-shaped parts (10), **characterized in that** the auxiliary element (15) is adapted to work together with a rod-shaped part (10) in a well-defined positional relationship via a fixed connection, and to be clamped into a processing device (36) and a connecting device (37) for the rod-shaped part (10), the auxiliary element (15) including reference means (23, 24, 26, 27) defining a coordinate system of the rod-shaped part (10) which allow the determination of dimensions at the rod-shaped part (10), being clamped in the processing device (36) or the connecting device (37) via the auxiliary element (15), relative to the auxiliary element (15), the auxiliary element (15) being detachable from the allocated rod-shaped part (10).

2. Auxiliary element according to claim 1, wherein the reference means (23, 26, 27) are designed to determine an axial reference position of the allocated rod-shaped part (10).

3. Auxiliary element according to claim 1 or 2, wherein the reference means include at least one reference surface (26, 27) which is perpendicular to the longitudinal axis of the rod-shaped part (10).

4. Auxiliary element according to one of the claims 1 to 3, **characterized in that** the reference means (23, 24) are designed to determine an angular position of the allocated rod-shaped part (10).

5. Auxiliary element according to one of the claims 1 to 4, **characterized in that** the reference means are designed to define an alignment of the allocated rod-shaped part (10).

6. Auxiliary element according to one of the claims 1 to 5, including identification means (26) for identifying the allocated rod-shaped part (10).

7. Auxiliary element according to one of the claims 1 to 6, wherein the auxiliary element (15) is a two-part element.

8. Method for manufacturing a framework (11) formed of rod-shaped parts (10), **characterized in that** the method includes the following steps:
- fixedly connecting the rod-shaped parts (10) with a respectively allocated auxiliary element (15) according to one of the claims 1 to 7, which works together with the rod-shaped part (10) in a well-defined positional relationship, and defines a coordinate system of the rod-shaped part (10);
- clamping the rod-shaped part (10) into a computer-controlled processing device (36) via the auxiliary element (15);
- processing the rod-shaped parts (10) in the computer-controlled processing device (36), wherein dimensions can be determined at the rod-shaped part (10), being clamped in the processing device (36), relative to the auxiliary element (15),
- connecting the rod-shaped parts (10) to form the framework (11) in a computer-controlled connecting device (37), wherein the rod-shaped part (10) is clamped in the connecting device (37) via the auxiliary element (15) and dimensions can be determined at the rod-shaped part (10), being clamped in the connecting device (37), relative to the auxiliary element (15), and
- detaching the auxiliary elements (15) from the rod-shaped parts (10), wherein each auxiliary element (15) during the whole processing process and connecting process between being connected with the allocated rod-shaped part (10) until being detached from the allocated rod-shaped part (10) remains mounted on the allocated rod-shaped part (10).

9. Method according to claim 8, wherein the auxiliary element (15) is used for defining an axial reference position (35) of the allocated rod-shaped part (10).

10. Method according to claim 8 or 9, wherein the auxiliary element (15) is used for defining an angular position of the allocated rod-shaped part (10).

11. Method according to one of the claims 8 to 10, wherein the auxiliary element (15) is used for defining an alignment of the allocated rod-shaped part (10).

12. Method according to one of the claims 8 to 11, including reading out and processing an identification means (26) of the auxiliary element (15).

13. Method according to one of the claims 8 to 12, wherein the auxiliary element (15) is mounted in a central section of an allocated rod-shaped part (10).

14. Computer-controlled device (36; 37), including a computer-controlled processing device (36) comprising a processing tool (28) for processing and/or a computer-controlled connecting device (37) comprising a connecting tool (40) for connecting at least one rod-shaped part (10) for manufacturing a framework (11) formed of rod-shaped parts (10), **characterized in that** the device includes a clamping device or gripping device (33; 41) for clamping an auxiliary element (15) according to one of the claims 1 to 7, which is fixedly connected with a rod-shaped part (10) and defines a coordinate system of the rod-shaped part (10), and a computer device which is adapted to determine dimensions at a rod-shaped part (10), being clamped in the processing device and/or the connecting device (36; 37) via the auxiliary element (15), relative to the auxiliary element (15).

15. Device according to claim 14, including means for reading out and processing an identification means (26) of the auxiliary element (15).

## Revendications

1. Elément auxiliaire (15) à utiliser dans la fabrication d'un treillis (11) formé à partir de pièces en forme de tiges (10), **caractérisé en ce que** l'élément auxiliaire (15) est conçu pour coopérer de façon précise, par un raccordement fixe, avec une pièce en forme de tige (10) et pour s'enserrer dans un dispositif d'usinage (36) et un dispositif de raccordement (37) pour la pièce en forme de tige (10), comprend des moyens de référence (23, 24, 26, 27) définissant un système de coordonnées de la pièce en forme de tige (10) et permettant de déterminer, par rapport à l'élément auxiliaire (15), des dimensions de la pièce en forme de tige (10) enserrée dans le dispositif d'usinage (36) ou le dispositif de raccordement (37) par le biais de l'élément auxiliaire (15), et peut être démonté de la pièce en forme de tige (10) associée.

2. Elément auxiliaire selon la revendication 1, dans lequel les moyens de référence (23, 26, 27) sont conçus pour déterminer un point de référence axial de la pièce en forme de tige (10) associée.

3. Elément auxiliaire selon la revendication 1 ou 2, dans lequel les moyens de référence comprennent au moins une surface de référence (26, 27) perpendiculaire à l'axe longitudinal de la pièce en forme de tige (10).

4. Elément auxiliaire selon l'une des revendications 1 à 3, **caractérisé en ce que** les moyens de référence (23, 24) sont conçus pour déterminer une position angulaire de la pièce en forme de tige (10) associée.

5. Elément auxiliaire selon l'une des revendications 1 à 4, **caractérisé en ce que** les moyens de référence sont conçus pour définir une orientation de la pièce en forme de tige (10) associée.

6. Elément auxiliaire selon l'une des revendications 1 à 5, comprenant des moyens d'identification (26) permettant d'identifier la pièce en forme de tige (10) associée.

7. Elément auxiliaire selon l'une des revendications 1 à 6, l'élément auxiliaire (15) étant réalisé en deux parties.

8. Procédé de fabrication d'un treillis (11) formée à partir de pièces en forme de tiges (10), **caractérisé en ce que** le procédé comprend les étapes suivantes :
- raccordement fixe des pièces en forme de tiges (10) à un élément auxiliaire (15) associé conforme à l'une des revendications 1 à 7, coopérant avec précision avec la pièce en forme de tige (10), définissant un système de coordonnées de la pièce en forme de tige (10) ;
- enserrement de la pièce en forme de tige (10) dans un dispositif d'usinage (36) commandé par ordinateur par le biais de l'élément auxiliaire (15) ;
- usinage des pièces en forme de tiges (10) dans le dispositif d'usinage (36) commandé par ordinateur, des dimensions de la pièce en forme de tige (10) enserrée dans le dispositif d'usinage (36) pouvant être déterminées par rapport à l'élément auxiliaire (15),
- raccordement des pièces en forme de tiges (10) pour former le treillis (11) à l'aide d'un dispositif de raccordement (37) commandé par ordinateur, la pièce en forme de tige (10) étant enserrée dans le dispositif de raccordement (37) par le biais de l'élément auxiliaire (15) et des dimensions de la pièce en forme de tige (10) enserrée dans le dispositif de raccordement (37) pouvant être déterminées par rapport à l'élément auxiliaire (15), et
- retrait des éléments auxiliaires (15) des pièces en forme de tiges (10), chaque élément auxiliaire (15) restant monté sur la pièce en forme de tige (10) associée pendant toute l'opération d'usinage et de raccordement allant du raccordement à la pièce en forme de tige (10) associée au retrait de la pièce en forme de tige (10) associée.

9. Procédé selon la revendication 8, dans lequel l'élément auxiliaire (15) est utilisé pour définir un point de référence axial (35) de la pièce en forme de tige (10) associée.

10. Procédé selon la revendication 8 ou 9, dans lequel l'élément auxiliaire (15) est utilisé pour définir une position angulaire de la pièce en forme de tige (10) associée.

11. Procédé selon l'une des revendications 8 à 10, dans lequel l'élément auxiliaire (15) est utilisé pour définir une orientation de la pièce en forme de tige (10) associée.

12. Procédé selon l'une des revendications 8 à 11, comprenant la lecture et le traitement d'un moyen d'identification (26) de l'élément auxiliaire (15).

13. Procédé selon l'une des revendications 8 à 12, dans lequel l'élément auxiliaire (15) est disposé dans une zone centrale d'une pièce en forme de tige (10) associée.

14. Dispositif (36 ; 37) commandé par ordinateur, comprenant un dispositif d'usinage (36) commandé par ordinateur et doté d'un outil d'usinage (28) permettant d'usiner et/ou un dispositif de raccordement (37) commandé par ordinateur et doté d'un outil de raccordement (40) permettant de raccorder au moins une pièce en forme de tige (10) pour la fabrication d'un treillis (11) formé de pièces en forme de tiges (10), **caractérisé en ce que** le dispositif comprend un système de serrage ou de préhension (33 ; 41) permettant d'enserrer un élément auxiliaire (15) conforme à l'une des revendications 1 à 7, raccordé de manière fixe à une pièce en forme de tige (10) et définissant un système de coordonnées de la pièce en forme de tige (10), et un système d'ordinateur qui est conçu pour déterminer, par rapport à l'élément auxiliaire (15), des dimensions d'une pièce en forme de tige (10) enserrée dans le dispositif d'usinage et/ou de raccordement (36 ; 37) par le biais de l'élément auxiliaire (15).

15. Dispositif selon la revendication 14, comprenant des moyens de lecture et de traitement d'un moyen d'identification (26) de l'élément auxiliaire (15).
